# EUROPEAN PATENT APPLICATION

(11) **EP 3 498 473 A1**
(43) Date of publication of application: **19.06.2019**
(21) Application number: 17207780.2
(22) Date of filing: 15.12.2017
(51) Int. Cl.: B33Y 30/00, B29C 64/153, B29C 64/165, B29C 64/232, B29C 64/245, B22F 3/105

(54) **MODULE FOR AN APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Herzog, Frank, 96215 Lichtenfels (DE); Stammberger, Jens, 96472 Rödental (DE); Haderlein, Hannes, 96047 Bamberg (DE); Schneider, Felix, 96479 Weitramsdorf (DE); Hertha, René, 96215 Lichtenfels (DE); Kaiser, Markus, 96117 Memmelsdorf (DE); Schulz, Friedrich, 96450 Coburg (DE); Gagel, Tobias, 96199 Zapfendorf (DE)
(74) Representative: Hafner & Kohl

(57) **Abstract**

Module (5) for an apparatus (1) for additively manufacturing of three-dimensional objects (2) by means of successive layerwise selective irradiation and consolidation of layers of a build material (3) which can be consolidated by means of an energy source (4), in particular the module (5) is mountable in or mounted in a process chamber (6) of an apparatus (1), which module (5) comprises a module build chamber (8) and a module dose chamber (7), wherein a module build plate carrier (12) moveable relative to at least one module build chamber wall (13) and a module dose plate carrier (10) moveable relative to at least one module dose chamber wall (11) are provided, wherein a lever device (14) mechanically linking the module build plate carrier (12) with the module dose plate carrier (10) is provided in that a movement of the module build plate carrier (12) results in an opposed movement of the module dose plate carrier (10) and vice versa.

## Description

The invention relates to a module for an apparatus for additively manufacturing of three-dimensional objects by means of successive layerwise selective irradiation and consolidation of layers of a build material which can be consolidated by means of an energy source, in particular the module is mountable in or mounted in a process chamber of an apparatus, which module comprises a module build chamber and a module dose chamber, wherein a module build plate carrier moveable relative to at least one module build chamber wall and a module dose plate carrier moveable relative to at least one module dose chamber wall are provided.

Such modules for additively manufacturing of three-dimensional objects are generally known from prior art that are used to reduce an effective volume of a build chamber and/or a dose chamber to save build material, for example in simulation processes and/or test build processes.

The manufacturing process that normally is executed in the apparatus is performed on the module that is arranged inside the process chamber of the apparatus. In particular, several components of the apparatus can be coupled with components of the module. For instance, a drive device adapted to drive the master build plate or the master build plate carrier can be coupled with the build plate carrier of the module. Hence, a corresponding build process can be controlled via the apparatus but the module is used to perform the build process. Therefore, it is not necessary to use the master build plane and/or the master dose plane that are larger in comparison with the module. Therefore, build material can be saved, if only small parts compared with the area of the master build plane are manufactured.

Further, it is known from prior art that it is useful to control a movement of the module dose plate depending on a movement of the module build plate. In other words, the amount of build material that is provided via a movement of the dose plate depends on the amount of build material that is needed based on the "empty" volume generated by a movement of the module build plate. In particular, it has to be ensured that enough build material is provided via the movement of the module dose plate to at least properly fill the volume in the module build chamber generated by lowering the module build plate.

It is an object to provide a module for an apparatus for additively manufacturing of three-dimensional objects, wherein the coupling of the module dose plate and the module build plate is improved.

The object is inventively achieved by a module according to claim 1. Advantageous embodiments of the invention are subject to the dependent claims.

The module described herein is a module for an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electronic beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a (master) process chamber, an irradiation device which is adapted to selectively irradiate a build material layer disposed in the process chamber with at least one energy beam, and a stream generating device, as described before, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

Throughout this application the terms "module" and "master" are used, wherein the term "module" refers to the module that is arranged / inserted into the process chamber of the apparatus. The term "master" refers to a component of the apparatus the module is inserted in. For example, the master build chamber is the build chamber of the apparatus, whereas the module build chamber is the build chamber of the module inserted into the process chamber of the apparatus.

The module itself may comprise different "sub-modules", such as a module dose chamber for receiving fresh build material and providing a module dose plane, a module build chamber for providing a module build plane and carrying the powder bed in which the object is additively manufactured and a module overflow chamber for receiving surplus build material. The module may be arranged inside the apparatus. In particular, several components of the apparatus can be coupled or can interact with components of the module. Hence, a corresponding build process can be controlled via the apparatus but the module is used to perform the build process or the build process is performed on the module process plane provided by the module, respectively. Therefore, it is not necessary to use the master build plane and/or the master dose plane that are larger in comparison with the module. Therefore, build material can be saved, if only small parts compared with the area of the master build plane are manufactured or e.g. parameters of the apparatus are tested.

The invention is based on the idea that a lever device is provided that mechanically links the module build plate carrier with the module dose plate carrier, whereby a movement of the module build plate carrier results in an opposed movement of the module dose plate carrier and vice versa. Thus, the lever device mechanically links the module plate carrier with the module dose plate carrier, wherein the module build plate carrier and the module dose plate carrier may, for example, be arranged on or connected to different lever arms of the lever device. Therefore, a movement of one of the lever arms in one direction results in an opposed movement of the other lever arm in an opposite direction, wherein the attached plate carriers move in opposite directions. Of course, another arrangement of the lever device that results in an opposed movement of the two module plate carriers is also feasible.

The term "plate carrier" in the scope of this application refers to any part or portion of the carrying mechanism, e.g. a carrying device that is assigned to the respective build plate or dose plate resulting or contributing to a movement of the build plate or the dose plate. In particular, a carrying element carrying the dose plate or the build plate can be considered as "plate carrier".

To arrange the module inside the master process chamber a support structure, e.g. a frame, may be provided to which the module may be connected. Thus, the module may be mounted inside the master process chamber via the support structure. The apparatus may comprise mounting means that are provided to connect the module with the apparatus. Therefore, the apparatus may provide specific mounting means to connect or to receive the module, respectively. Alternatively, the apparatus may provide mounting means regularly provided for receiving a master build module, wherein the module can be attached to the mounting means instead of the master build module, if a corresponding manufacturing process is to be performed on the module.

In the mounted position the module is preferably arranged in that a module process plane is positioned in the same plane as the master process plane, in particular in the position the master build plane of the master build module is regularly arranged in. In other words, the module is mounted in an opening in the process chamber that is provided for a regular powder module for the apparatus, e.g. a master build module. Thus, the module build plane and the module dose plane are positioned in the master process plane. This embodiment allows for using several components of the apparatus, such as a build material application device and an irradiation device. Due to the module being positioned in the master process plane, manufacturing processes can be performed on the module process plane without the need for changing the application device or the irradiation device.

Hence, small (compared to the master build plane) three-dimensional objects can be manufactured and/or new parameters for operating the apparatus, e.g. process parameters, in particular irradiation parameters or build material application parameters, may be tested on the module process plane, wherein build material can be saved, since a smaller volume of build material is used compared to performing the manufacturing process using the master dose chamber and the master build chamber. The module allows for performing a corresponding manufacturing process with a reduced amount of build material, since the module dose chamber and the module build chamber and therefore, the module dose plane and the module build plane are smaller compared to the corresponding components (e.g. master dose chamber and master build chamber) of the apparatus.

Further, it is possible to use a different build material in the dose module, i.e. in the module dose chamber and the module build chamber, than in the master dose chamber. Hence, the master dose chamber and the module dose chamber may be adapted to receive different build materials. Thus, it is possible to manufacture objects with the apparatus using a different build material in the module, wherein a contamination of the master dose module or the master build module with the different build material can be prevented, since the manufacturing process using the different build material is (entirely) performed on the module. By doing so, the apparatus may be used to manufacture objects, e.g. small quantities, parameter tests or prototypes, from a build material differing from the build material that is currently used in the master dose module. Thus, it is not necessary to empty and clean the master dose module to use the different build material, but the module allows for using the different build material within the same apparatus without the need to change the build material in the master dose module and clean the master dose module. Thus, a manufacturing process using a different build material than usual can be performed more efficiently.

To further reduce a risk of contamination, the master dose plane and the master overflow opening can be covered, e.g. via a cover element sealing the master dose plane or the master overflow opening, to prevent the different build material from entering the master dose chamber or the master overflow chamber. For example, the master dose module may be filled with a first build material, e.g. aluminum. On the module a manufacturing process can be performed, wherein an object is built from a second build material, e.g. titanium, received in the module dose chamber. Hence, the manufacturing process can be performed on the module without the second build material used in the module contaminating the first build material. Preferably, the master dose plane and the master overflow plane are covered, when the manufacturing process is performed on the module.

As the module dose plane is arranged in the same plane, i.e. the master process plane, as the master dose plane, the application device, in particular a coater blade, of the apparatus may be used in the manufacturing process to pick up fresh build material provided by the module dose chamber in the module dose plane via the module dose plate carrier (an upward movement of the module dose plate carrier moves the build material carried by the module dose plate carrier and thereby, provides more fresh build material). The build material may be conveyed via the application device to the module build plane and distributed in the module build plane. Excess build material is further depleted into an opening of the module overflow chamber, wherein it is also possible to use the master overflow module to deplete excess build material.

The build material may be filled into the module dose chamber in advance to mounting the module inside the apparatus. The module dose chamber may therefore, be sealed with a suitable sealing element, such as a sealing lid. When the module is properly mounted inside the process chamber of the apparatus, wherein the module process plane is arranged in the same plane as the master process plane, the lid may be removed to grant access to the build material received in the module dose chamber.

It is also possible to fill the build material into the module dose chamber with the module in the mounted position, i.e. inside the apparatus. The build material may be filled manually into the module dose chamber, for example via a glovebox. Further, a build material refill unit of the apparatus that is regularly provided for refilling build material into the master dose chamber may be used to refill build material into the module dose chamber. The build material refill unit of the apparatus may be adapted to refill the build material directly into the module dose chamber or the build material refill unit may be adapted to refill the build material into the master dose chamber, wherein the application device of the apparatus is used to convey the build material from the master dose chamber into the module dose chamber.

The lever device allows for a defined movement of the module dose plate carrier dependent on a movement of the module build plate carrier or vice versa. Dependent on the length of the respective lever arm the module dose plate carrier or the module build plate carrier is attached to or connected with, a movement of one module plate carrier is transmitted into a movement of the other module plate carrier. In particular, the module plate carriers are moved in opposite directions due to the coupling via the lever device. If one of the module plate carriers is moved in one direction, the other module plate carrier is moved in the opposite direction.

According to a preferred embodiment of the module, the lever device is adapted to transmit the downward movement of the module build plate carrier into an upward movement of the module dose plate carrier with a defined transmission ratio and vice versa. As described before, dependent on the specific construction of the lever device, in particular the ratio of the lengths of the lever arms the two module plate carriers are attached to or connected with, the downward movement of the module build plate carrier is transmitted into an upward movement of the module dose plate carrier. Self-evidently, it is also possible to drive the module dose plate carrier and have the movement of the module dose plate carrier transmitted via the lever device into a movement of the module build plate carrier. Accordingly, the module dose plate carrier is moved upwards resulting in an opposed downward movement of the module build plate carrier.

The upward movement of the module dose plate carrier defines how much build material is provided to be applied onto the module build plane. The module build plane volume is generated by lowering the module build plate carrier within a module build chamber, wherein the actual additive build-up of three-dimensional objects takes place in the module build plane. As the module build plate carrier is lowered, an "empty" volume is generated that can be filled with build material that is provided by the upward movement of the module dose plate carrier. The provided build material can, for example, be applied onto the module build plane via a suitable build material application unit, e.g. a coating unit, such as or comprising a recoater blade.

The lever device of the module further may comprise a first lever connecting the module build plate carrier with the module dose plate carrier. Thus, the connection is realized via the first lever that connects both module plate carriers in that, as described before, an opposed movement of the module dose plate carrier and the module build plate carrier results, if one of the module plate carriers is moved.

The first lever may be arranged in that the pivot point of the first lever is located between the module build plate carrier and the module dose plate carrier, in particular between a center of the module build plate carrier and a center of the module dose plate carrier, wherein the pivot point is preferably arranged centric, i.e. centric between the module build plate carrier and the module dose plate carrier. Dependent on the position of the pivot point of the first lever and relating thereto, the respective lengths of the lever arms the module plate carriers are connected to, a transmission ratio is adjustable. Thus, dependent on the position of the pivot point and the lengths of the lever arms, a defined movement path length of one of the module plate carriers results in a corresponding movement path length of the other module plate carrier. Instead of varying the position of the pivot point of the first lever, the lengths of the lever arms may be adjusted independently. For example, the length of the lever arm on the driven side, i.e. the side that is connected with the drive device, maybe longer or smaller than the length of the other lever arm.

It is also possible to have a module dose plate that is carried by the module dose plate carrier, wherein the module dose plate has a different area than the area of a module build plate carried by the module build plate carrier. In particular, it is preferred that the area of the module dose plate is 1.3 to 1.8 times larger, in particular 1.5 times larger than the module build plate. Thus, a proper application of build material can be assured, as enough build material can be provided via the module dose plate to ensure that a gapless application of build material onto the build plane is feasible.

Further, adjusting a defined transmission ratio can be omitted, as a necessary amount of build material that is provided via the module dose plate is defined via the area of the module dose plate. Of course, it is also possible to have the module dose plate and the module build plate have the same area (or any other arbitrary areas) and to adjust the length of the lever arms correspondingly in that the module dose plate is moved 1.3 times to 1.8 times more, in particular 1.5 times more than the module build plate.

Additionally, the module preferably comprises two second levers that are adapted to pivotably connect the first lever with the module build plate carrier or the module dose plate carrier. Thus, each second lever is pivotably connected to the first lever and to one of the module plate carriers. The connection of the second lever with the module plate carriers and/or the first lever can be built as a hinge or a hinge may be used to connect the first lever with the second lever and to connect a second lever with the respective module plate carrier. By having the single connections of the module plate carriers and the first and second lever(s) pivotable, constraining forces can be avoided.

Thus, a geometry of the lever device may be referred to as "U-shaped", as the first lever and the two second levers that essentially extend upwards from the first lever are arranged in a U-shape. Of course, the geometry of the lever device or the arrangement of the second levers and the first lever relative to each other changes with the position of the module plate carriers.

To drive the module build plate carrier and/or the module dose plate carrier different configurations or modes are feasible. For example, the module build plate carrier and/or the module dose plate carrier may be driven by a separate drive device or via a drive device of the apparatus, in particular a drive device adapted to drive the master build plate carrier of the apparatus. According to the first alternative a separate drive device can be provided that, for example, can be considered as part of the module and/or the module can be detachably connected with the separate drive device.

According to the other alternative, the module may be coupled with the drive device that is adapted to drive a master plate carrier of the apparatus. Preferably, the module build plate carrier is drivable via the drive device adapted to drive the master build plate carrier, wherein the resulting movement of the module build plate carrier is transmitted via the lever device to the module dose plate carrier, as described before. In other words, the drive device that is provided with the apparatus, e.g. the drive device provided for driving the master build plate or the master dose plate, may be connected to the module in that a movement of the module plate carrier can be controlled by the corresponding drive device of the apparatus, i.e. the drive device assigned to the corresponding master plate carrier. Thus, the module can be controlled via a corresponding control unit of the apparatus, e.g. wherein the drive device of the apparatus is used to (directly) drive the module build plate carrier and wherein the movement of the module dose plate carrier is provided via the lever device. Of course, it is also possible to have the module dose plate carrier (directly) driven by a corresponding drive device of the apparatus adapted to drive the master dose plate carrier.

The module can further be improved in that the build plate carrier (master build plate carrier) of the apparatus is connected with the module build plate carrier via at least one support element or a dose plate carrier of the apparatus (master dose plate carrier) is connected with the module dose plate carrier via the at least one support element. Thus, at least one support element can be provided, in particular the module may comprise at least one support element, wherein the support element connects the respective master plate carrier with the corresponding module plate carrier, preferably the master build plate carrier is connected with the module build plate carrier via the at least one support element. Preferably, more than one support element may be provided to ensure a stable arrangement and movement of the respective plate carrier.

Alternatively, the first lever of the first lever device may be driven by a corresponding drive device, for example the drive device of the apparatus provided for driving a master plate carrier, e.g. the master dose plate carrier or the master build plate carrier. As described before, the first lever connects the movements of the module plate carriers with each other, in that a movement of one of the module plate carriers results in an opposed movement of the other module plate carrier. The corresponding drive device may be connected to the first lever or to one of the second levers, wherein due to the direct drive of the first lever both plate carriers may be driven or positioned, respectively. Thus, at least one support element may be provided to couple a drive device of the apparatus (e.g. provided for driving a master plate carrier) directly with the first lever. Hence, the support element does not have to be coupled to the module plate carrier and the master plate carrier, but it is also possible to have a support element coupling the drive device with the first lever.

The at least one support element may alternatively be provided for connecting the module build plate carrier or the module dose plate carrier with the or a drive device. For example, the module build plate carrier may be connected via a support element to the drive device of the apparatus that is adapted to drive the master build plate carrier. Thus, the support element may be provided for (directly) connecting the respective module plate carrier with the drive device of the apparatus adapted to drive the corresponding master plate carrier.

The at least one support element may be built as a guide column protruding a corresponding guide bushing arranged in a bottom portion of the module. The interaction of the guide column with the guide bushing allows for a defined guided movement of the support element and thus, of the corresponding module plate carrier. The movement of the support element therefore, is guided via the guide bushing that is integrated into or attached to a bottom portion, e.g. a bottom plate, of the module.

According to another embodiment, the module may comprise at least two, preferably four support elements, in particular guide columns, that are assigned to the module build plate carrier and the module dose plate carrier each. Accordingly, the guide columns of the module dose plate carrier may protrude a bottom portion of the module in which the guide bushings may be arranged. By providing multiple guide columns, i.e. support elements, a particularly stable arrangement and movement of the module plate carriers is feasible.

Further, the module may comprise a holding means connecting the at least two support elements that are designed to the module dose plate carrier and/or the module build plate carrier. Thus, a holding means can be provided, that is preferably built as a holding plate, connecting at least two, in particular all support elements, assigned to the respective module plate carrier. It is also possible to have a holding means connecting the at least two support elements assigned to the module dose plate carrier and another holding means connecting the at least two support elements assigned to the module build plate carrier. The holding means that connects the respective support elements further enhances the stability of the setup of the module. The holding means preferably is arranged on the other side of the bottom portion of the module connecting the free ends of the support elements that stick out of the guide bushings on the side opposing the process plane, wherein the process plane is the plane in which the manufacturing process takes place, in particular in which the dose plane and the build plane are arranged.

According to another embodiment of the module, an overflow chamber can be provided that is adapted to receive excess build material, wherein the overflow chamber is detachably, in particular interchangeably, connected with the module. When applying build material from the module dose plane onto the module build plane, surplus build material is conveyed into the module overflow chamber. The module overflow chamber can be detached, in particular interchanged, for example, if the module overflow chamber is full or, if another manufacturing process is started, for example using a different build material.

Besides, the invention relates to an apparatus for additively manufacturing of three-dimensional objects by means of successive layerwise selective irradiation and consolidation of layers of a build material which can be consolidated by means of an energy source, comprising a module that is arrangeable or arranged in a process chamber of the apparatus, in particular for reducing a volume of a build chamber and/or a dose chamber of the apparatus, which module comprises a module build chamber and a module dose chamber, wherein the module build chamber comprises a module build plate carrier movable relative to at least one module build chamber wall and wherein the module dose chamber comprises a module dose plate carrier movable relative to at least one module dose chamber wall, wherein a lever device mechanically linking the module build plate carrier with the module dose plate carrier is provided, wherein a movement of the module build plate carrier results in an opposed movement of the module dose plate carrier and vice versa.

Additionally, the invention relates to a method for operating at least one apparatus for additively manufacturing of three-dimensional objects by means of successive layerwise selective irradiation and consolidation of layers of a build material which can be consolidated by means of an energy source, wherein a module, in particular an inventive module, as described above, is arranged in a process chamber of the apparatus, in particular for reducing a volume of a build chamber and/or a dose chamber of the apparatus, which module comprises a module build chamber and a module dose chamber, wherein the module build chamber comprises a module build plate carrier movable relative to at least one module build chamber wall and wherein the module dose chamber comprises a module dose plate carrier movable relative to at least one module dose chamber wall, wherein a movement of the module build plate carrier is mechanically linked to a movement of the module dose plate carrier via a lever device in that a movement of the module plate carrier results in an opposed movement of the module dose plate carrier and vice versa.

Self-evidently, all features, advantages and details described with respect to the inventive module are fully transferable to the inventive apparatus and the inventive method.

Exemplary embodiments of the invention are described with reference to the Fig. The Fig. are schematic diagrams, wherein
- Fig. 1: shows an apparatus with an inventive module arranged in the inventive apparatus; and
- Fig. 2: shows a detail of the apparatus from Fig. 1.

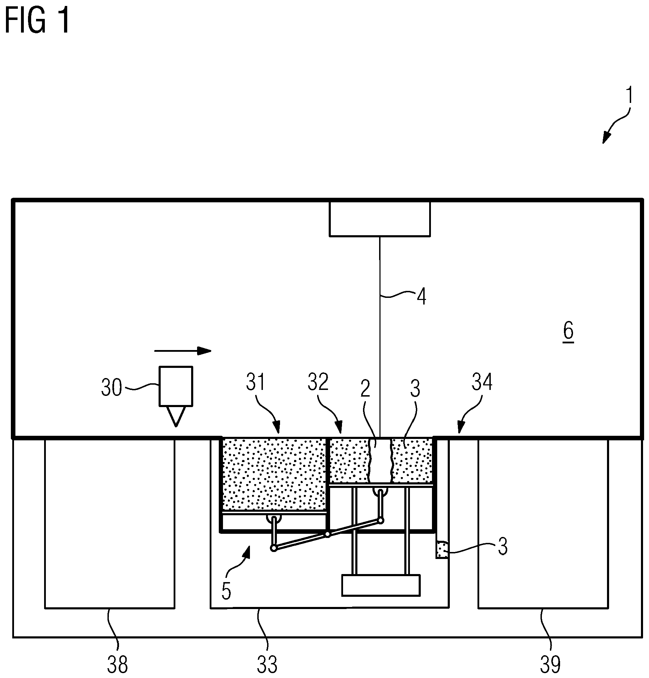

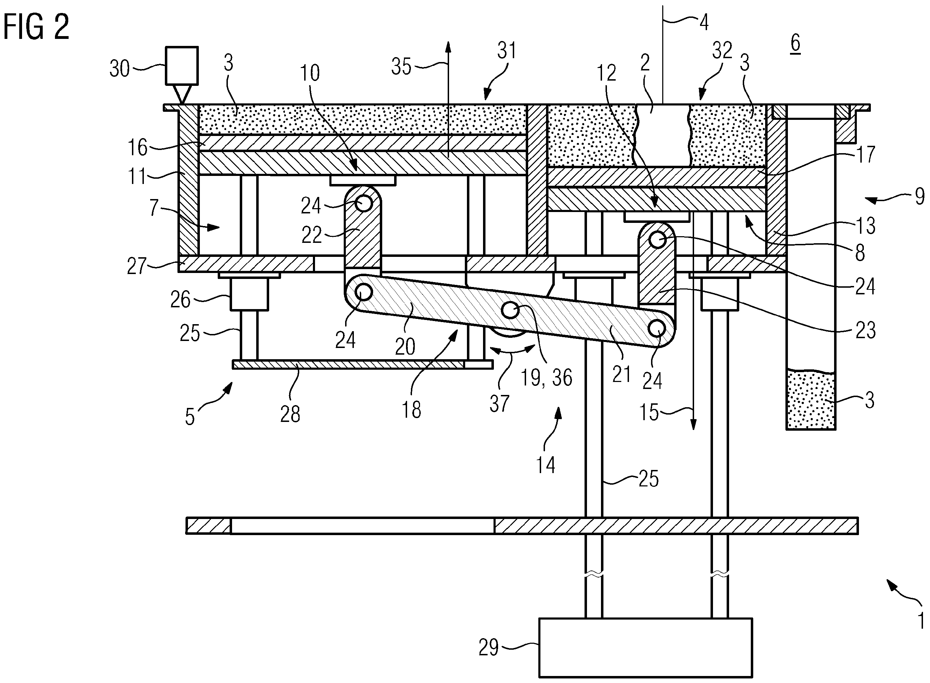

Fig. 1 shows an apparatus 1 for additively manufacturing three-dimensional objects 2 by means of successive layerwise selective irradiation and consolidation of layers of a build material 3 which can be consolidated by means of an energy source 4, for example a laser beam. The apparatus 1 comprises a separate module 5 that is detachably arranged in the apparatus 1, in particular in a process chamber 6 of the apparatus 1. A detail of the module 5 will be described subsequently with respect to Fig. 2. As can be derived from Fig. 1, the module 5 is arranged in an opening 33 regularly provided for receiving a build module (not shown) of the apparatus 1. In regular manufacturing processes a build module provides a build plane in which build material 3 can be irradiated to additively manufacture the object 2. For manufacturing processes in which not the whole size of the available build plane is required, for example for manufacturing small parts, prototypes or for testing process parameters, such as irradiation parameters or build material application parameters, the module 5 can be inserted into the apparatus 1 instead of the build module.

Thus, a module dose plane 31 and a module build plane 32 lie in a master process plane 34 of the apparatus 1, in particular in the position that in which in regular manufacturing processes the master build plane is positioned. The master process plane 34 is the plane in which the additive manufacturing process is performed in the apparatus 1, wherein the master process plane 34 may comprise, inter alia, a master dose plane, a master build plane and a master overflow opening, as indicated in Fig. 1 via an opening 38 for receiving a master dose module and an opening 39 for receiving a master overflow module. The openings 38, 39 are to be understood as exemplary and optional.

As can be derived from Fig. 2, the module 5 comprises a module dose chamber 7 and a module build chamber 8 and a module overflow chamber 9 (optional). The module overflow chamber 9 is detachable from the module 5, for example to exchange the module overflow chamber 9, if the module overflow chamber 9 is full with excess build material 3.Instead of the module overflow chamber 9 it is also possible to use the master overflow chamber of the apparatus 1.

In other words, the module 5 is used inside the apparatus 1, partially delimiting the process chamber 6 of the apparatus 1 bottom sides, wherein the module 5 provides the module dose chamber 7 and the module build chamber 8 that are smaller compared to the master dose chamber and the master build chamber of the apparatus 1, in particular 80 - 95% smaller, preferably 90% smaller. By providing a smaller module build chamber 8 and a smaller module dose chamber 7, build material 3 can be saved, for example, if new parameters are tested or other manufacturing process simulations are performed. The term simulation may in particular refer to performing an additive manufacturing process on a smaller scale.

As can further be derived from Fig. 2, a module dose plate carrier 10 is arranged in the module dose chamber 7 which is relatively movable to the module dose chamber 7, in particular to a module dose chamber wall 11, in particular upwards and downwards, or in other words towards the module dose plane 31 or away from the module dose plane 31. Accordingly, the module build chamber 8 receives a module build plate carrier 12 inside the module build chamber 8 which is movable relative to the module build chamber 8, in particular relatively movable to a module build chamber wall 13 in particular upwards and downwards, or in other words towards the module build plane 32 or away from the module build plane 32.

The module 5 further comprises a lever device 14 mechanically linking the module build plate carrier 12 with the module dose plate carrier 10. Thus, a movement of the module build plate carrier 12, in particular in downward direction, as indicated by arrow 15, results in a corresponding movement, in particular a corresponding upward movement, of the module dose plate carrier 10, as indicated by arrow 35. Of course, instead of connecting the lever device 14 with the module plate carriers 10, 12 it is possible to connect the lever device 14 directly with the module dose plate 16 and/or the module build plate 17.

To provide the opposed movement of the module plate carriers 10, 12 the lever device 14 comprises a first lever 18 that is pivotably arranged about a pivot point 19, for example, the first lever 18 may be supported on a structure of the module 5 via a hinge 36. The pivot point 19 is arranged, for example, between the centers of the module dose plate carrier 10 and the module build plate carrier 12. Dependent on the position of the pivot point 19 and the lengths of lever arms 20, 21 of the first lever 18, a transmission ratio of the movements of the module build plate carrier 12 and the module dose plate carrier 10 can be adjusted.

The lever device 14 further comprises two second levers 22, 23 that connect the module build plate carrier 12 and the module dose plate carrier 10 with the first lever 18, for example via hinges 24, in particular each of the second lever arms 22, 23 is coupled to the first lever 18 via a first hinge 24 and coupled to the corresponding module plate carrier 10, 12 via a second hinge 24. In other words, a downward movement of the module build plate 12, as depicted by the arrow 15, is transferred via the second lever 23 into the first lever arm 21 of the first lever 18 and therefore, a pivot movement around the pivot point 19 is induced, as indicated by arrow 37. Thus, the first lever 18 is pivotably mounted around a pivot axis essentially perpendicular to the first lever 18, wherein the pivot axis runs through the hinge 36.

The pivot movement of the first lever 18 around the pivot point 19 is transferred into the lever arm 20 of the first lever 18. The movement of the lever arm 20 is transferred via the second lever 22 into a movement of the module dose plate carrier 10. Thus, the module dose plate carrier 10 moves in the opposite direction (as indicated by arrow 35, contrary to arrow 15), wherein a ratio of the path length of the movement of the module dose plate carrier 10 to the movement path length of the module build plate carrier 12 depends on the lengths of the lever arms 20, 21 or the position of the pivot point 19, respectively.

The module dose plate carrier 10 and the module build plate carrier 12 are supported via support elements 25, for example four guide columns each, which guide columns 25 are guided in guide bushings 26 that are arranged with a bottom plate 27 of the module 5. Further, a holding means, for example a holding plate 28 is provided that connects the free ends of the support elements 25 assigned to the module dose chamber 7.

To provide the driven movement of the module build plate carrier 10, the support elements 25 assigned to the module build chamber 8 are connected to a drive device 29 which is the drive device of the apparatus 1 that is adapted to drive the master build plate carrier (not shown). In other words, a control unit of the apparatus 1 can be used to control the drive device 29 which in a normal or regular operation mode of the apparatus 1 drives the master build plate carrier. The respective drive device is connected via the support elements 25 assigned to the module build chamber 8 and connects the drive device 29 with the module build plate carrier 12 in that the module build plate carrier 12 can be moved in the direction of the arrow 15, in particular lowered (or opposite thereto). The driven movement of the module build plate carrier 12 is transferred via the lever device 14 into an opposed movement of the module dose plate carrier 10, as described above. Alternatively, it is also possible to connect the drive device 29 with the first lever 18, instead of the connection of the drive device 29 with the module build plate carrier 12.

As can further be derived from Fig. 2, the area of the module dose plate 16 is larger, in particular 1.5 times larger, than the area of the module build plate 17. With the module dose plate 16 built larger than the module build plane 17 it is assured that enough build material is provided to be conveyed via a coater 30 from the module dose plane 31 onto the module build plane 32.

## Claims

1. Module (5) for an apparatus (1) for additively manufacturing of three-dimensional objects (2) by means of successive layerwise selective irradiation and consolidation of layers of a build material (3) which can be consolidated by means of an energy source (4), in particular the module (5) is mountable in or mounted in a process chamber (6) of an apparatus (1), which module (5) comprises a module build chamber (8) and a module dose chamber (7), wherein a module build plate carrier (12) moveable relative to at least one module build chamber wall (13) and a module dose plate carrier (10) moveable relative to at least one module dose chamber wall (11) are provided, **characterized by** a lever device (14) mechanically linking the module build plate carrier (12) with the module dose plate carrier (10) in that a movement of the module build plate carrier (12) results in an opposed movement of the module dose plate carrier (10) and vice versa.

2. Module according to claim 1, **characterized in that** the lever device (14) is adapted to transmit a downward movement of the module build plate carrier (12) into an upward movement of the module dose plate carrier (10) with a defined transmission ratio.

3. Module according to claim 1 or 2, **characterized in that** the module build plate carrier (12) and/or the module dose plate carrier (10) are driveable via a separate drive device or via a drive device (29) of the apparatus (1), in particular a drive device (29) adapted to drive a build plate carrier of the apparatus (1).

4. Module according to claim 3, **characterized in that** the build plate carrier of the apparatus (1) is connected with the module build plate carrier (12) via at least one support element (25) or a dose plate carrier of the apparatus (1) is connected with the module dose plate carrier (10) via the at least one support element (25).

5. Module according to claim 4, **characterized in that** the module build plate carrier (12) and/or the module dose plate carrier (10) are connected with the or a drive device (29) via at least one support element (25).

6. Module according to claim 5, **characterized in that** the at least one support element (25) is built as a guide column protruding a corresponding guide bushing (26) arranged in a bottom portion (27) of the module (5).

7. Module according to one of the claims 4 to 6, **characterized in that** at least two, preferably four support elements (25), in particular guide columns, are assigned to the module build plate carrier (12) and the module dose plate carrier (10).

8. Module according to one of the claims 4 to 7, **characterized in that** the at least two support elements (25) assigned to the module dose plate carrier (10) and/or the module build plate carrier (12) are connected via a holding means (28), preferably a holding plate.

9. Module according to one of the preceding claims, **characterized in that** the module build plate carrier (12) is connected to the module dose plate carrier (10) via a first lever (18) of the lever device (14).

10. Module according to claim 9, **characterized in that** the pivot point (19) of the first lever (18) is arranged between a center of the module build plate carrier (12) and a center of the module dose plate carrier (10), preferably centric.

11. Module according to one claim 9 or 10, **characterized by** at least two second levers (20, 21) adapted to pivotably connect the first lever (18) with the module build plate carrier (12) or the module dose plate carrier (10).

12. Module according to one of the preceding claims, **characterized by** an module overflow chamber (9) adapted to receive excess build material (3), which module overflow chamber (9) is detachably, in particular interchangeably, connected with the module (5).

13. Apparatus (1) for additively manufacturing of three-dimensional objects (2) by means of successive layerwise selective irradiation and consolidation of layers of a build material (3) which can be consolidated by means of an energy source (4), comprising a module (5) that is arrangeable or arranged in a process chamber (6) of the apparatus (1), in particular for reducing a volume of a build chamber and/or a dose chamber of the apparatus (1), which module (5) comprises a module build chamber (8) and a module dose chamber (7), wherein the module build chamber (8) comprises a module build plate carrier (12) moveable relative to at least one module build chamber wall (13) and wherein the module dose chamber (7) comprises a module dose plate carrier (10) moveable relative to at least one module dose chamber wall (11), **characterized by** a lever device (14) mechanically linking the module build plate carrier (12) with the module dose plate carrier (10) in that a movement of the module build plate carrier (12) results in an opposed movement of the module dose plate carrier (10) and vice versa.

14. Method for operating at least one apparatus (1) for additively manufacturing three-dimensional objects (2) by means of successive layerwise selective irradiation and consolidation of layers of a build material (3) which can be consolidated by means of an energy source (4), wherein a module (5), in particular a module (5) according to one of the claims 1 to 14, is arranged in a process chamber (6) of the apparatus (1), in particular for reducing a volume of a build chamber and/or a dose chamber of the apparatus (1), which module (5) comprises a module build chamber (8) and a module dose chamber (7), wherein the module build chamber (8) comprises a module build plate carrier (12) moveable relative to at least one module build chamber wall (13) and wherein the module dose chamber (7) comprises a module dose plate carrier (10) moveable relative to at least one module dose chamber wall (11), **characterized in that** a movement of the module build plate carrier (12) is mechanically linked to a movement of the module dose plate carrier (10) via a lever device (14) **in that** a movement of the module build plate carrier (12) results in an opposed movement of the module dose plate carrier (10) and vice versa.
